# EUROPEAN PATENT APPLICATION

(11) **EP 4 122 658 A1**
(43) Date of publication of application: **25.01.2023**
(21) Application number: 21771279.3
(22) Date of filing: 15.02.2021
(51) Int. Cl.: B25J 9/22, G01N 29/26, G05B 19/42

(54) **CONTROL DEVICE, INSPECTION SYSTEM, CONTROL METHOD, PROGRAM, AND STORAGE MEDIUM**

(30) Priority: 18.03.2020 JP 2020047852
(71) Applicant: KABUSHIKI KAISHA TOSHIBA, Minato-ku Tokyo 105-0023 (JP)
(72) Inventor: TAKAHASHI, Hiromasa, Tokyo 105-0023 (JP); SAITO, Masahiro, Tokyo 105-0023 (JP); CHIBA, Yasunori, Tokyo 105-0023 (JP)
(74) Representative: Hoffmann Eitle
(86) International application number: PCT/JP2021/005498
(87) International publication number: WO 2021/186981

(57) **Abstract**

A control device (120) according to an embodiment receives first posture data of a posture of a first robot (110). The first robot (110) includes a first manipulator (111) and a first end effector (112). Furthermore, the control device (120) sets the posture of the first robot (110) based on the first posture data and causes the first robot (110) to perform a first task on a first member. The first posture data is generated based on second posture data. The second posture data is of a posture when a second robot (210) that includes a second manipulator (211) and a second end effector (212) performs a second task on the first member.

## Description

### [Technical Field]

Embodiments of the invention relate to a control device, an inspection system, a control method, a program, and a storage medium.

### [Background Art]

Various industrial robots are used in a production site. The posture in a task is taught to a robot before the robot is applied to a production line. It is desirable to reduce the time necessary for the teaching.

### Prior Art Documents

### [Patent Literature]

Patent Document 1: JP-A 2019-90727 (Kokai)

### Summary of Invention

### [Technical Problem]

A problem to be solved by the invention is to provide a control device, an inspection system, a control method, a program, and a storage medium that can reduce the time necessary for teaching.

### Solution to Problem

A control device according to an embodiment receives first posture data of a posture of a first robot. The first robot includes a first manipulator and a first end effector. Furthermore, the control device sets the posture of the first robot based on the first posture data and causes the first robot to perform a first task on a first member. The first posture data is generated based on second posture data. The second posture data is of a posture when a second robot that includes a second manipulator and a second end effector performs a second task on the first member.

### [Brief Description of Drawings]

[FIG. 1]

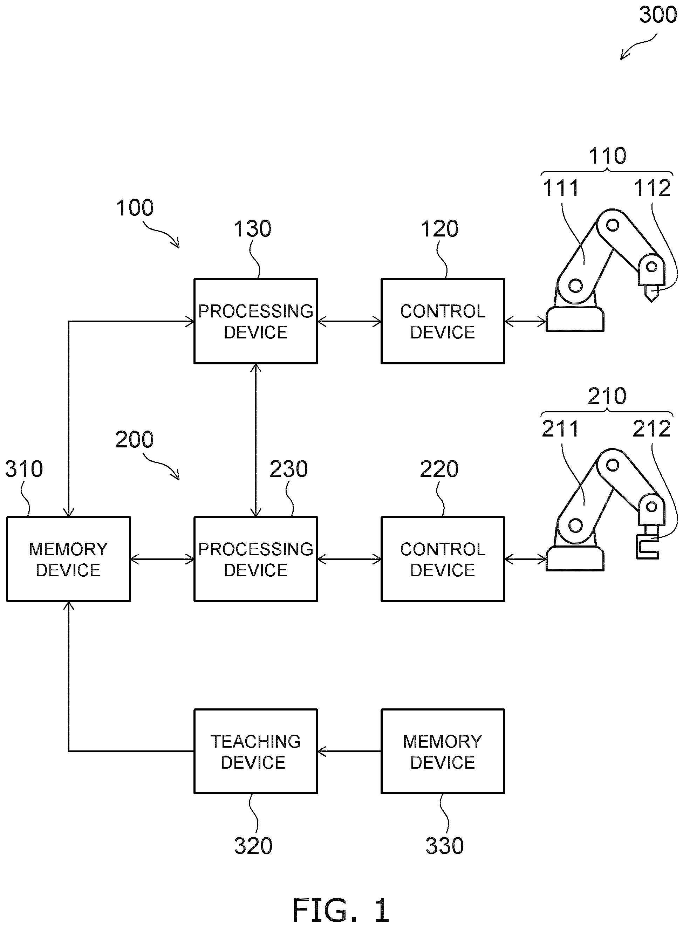

   FIG. 1 is a schematic view illustrating a production system to which a robot system according to an embodiment is applied.
[FIG. 2]

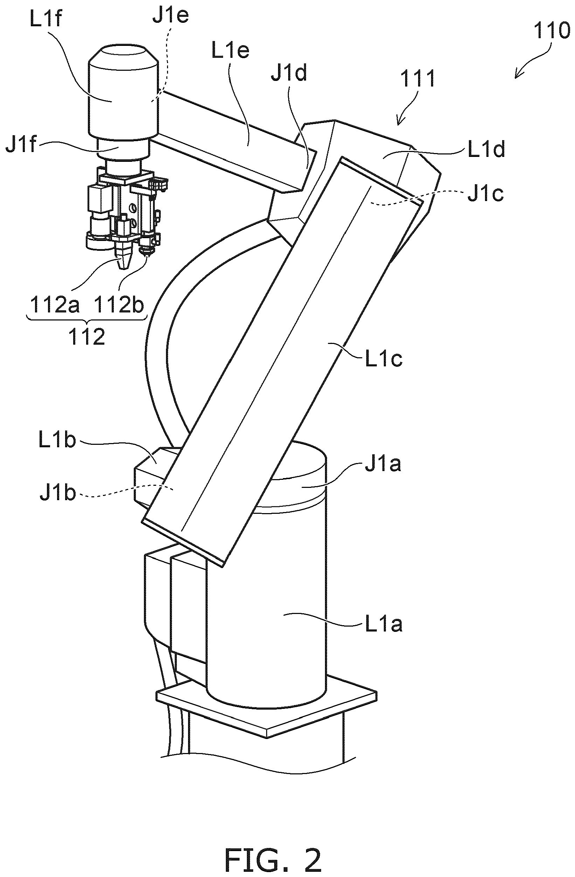

   FIG. 2 is a perspective view illustrating a first robot.
[FIG. 3]

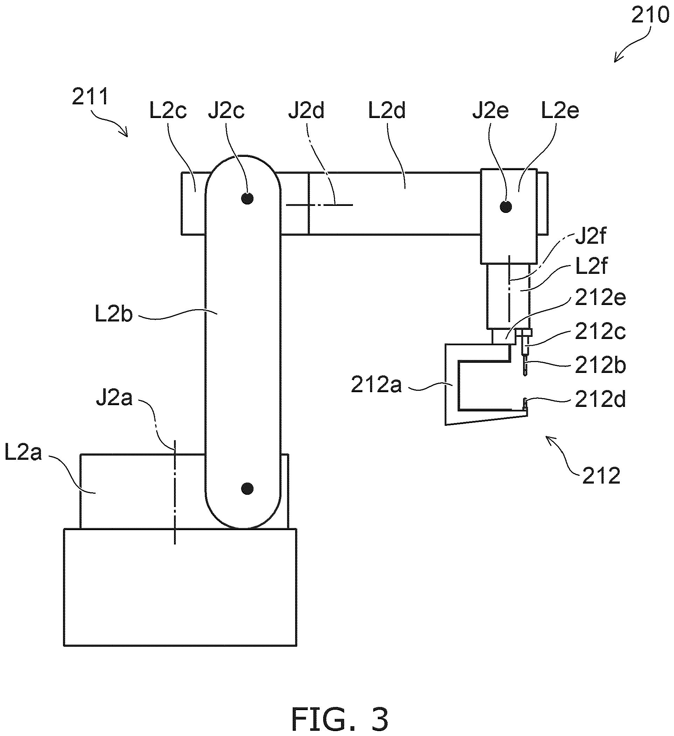

   FIG. 3 is a schematic view illustrating a second robot.
[FIG. 4]

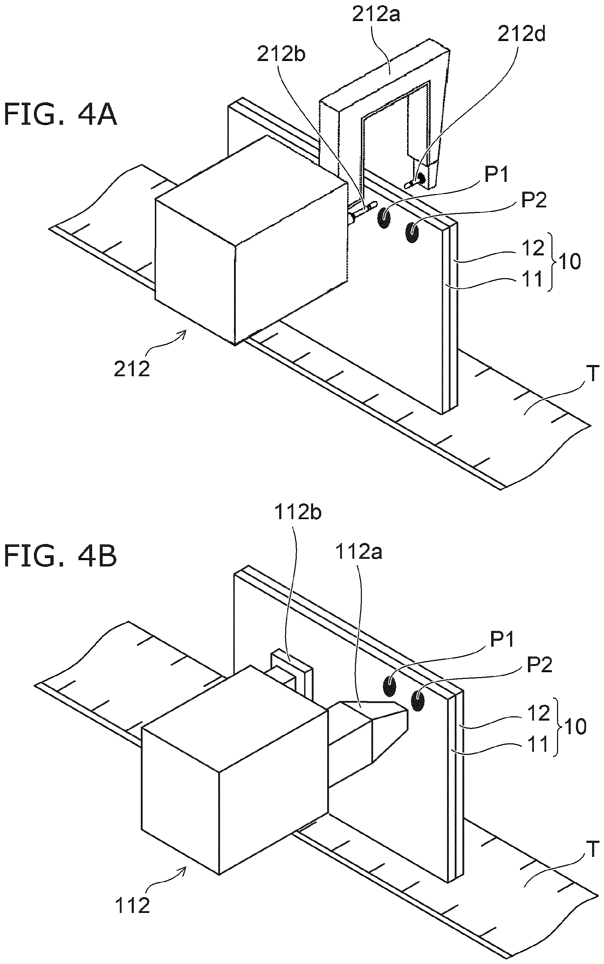

   FIGS. 4A and 4B are schematic views illustrating operations of a production system according to the embodiment.
[FIG. 5]

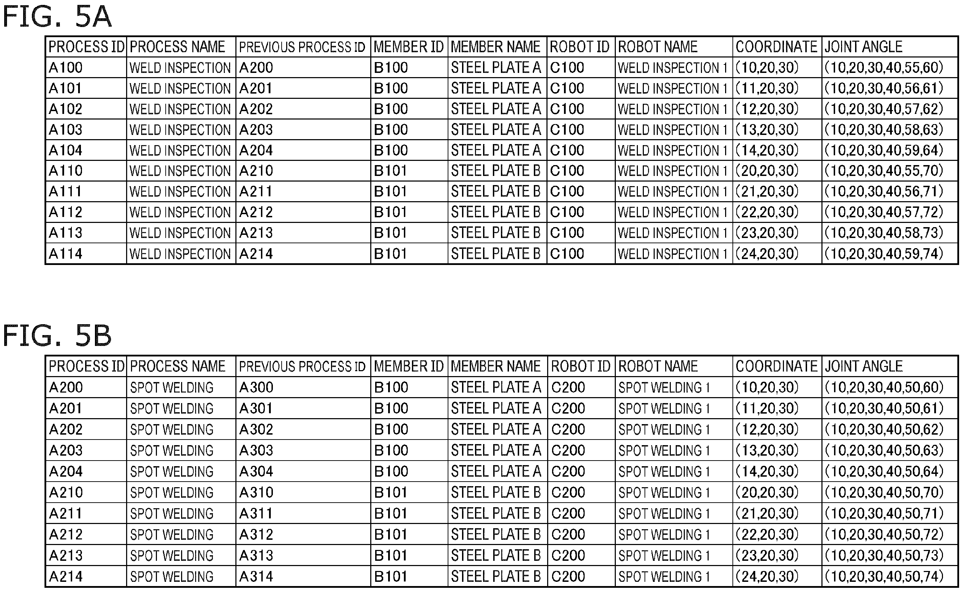

   FIGS. 5A and 5B are an example of data stored in a memory device.
[FIG. 6]

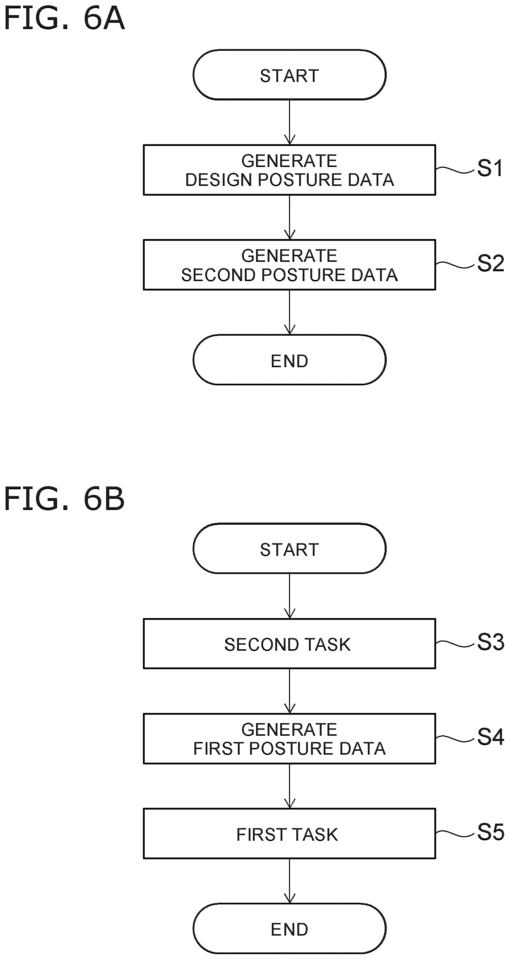

   FIGS. 6A and 6B are flowcharts illustrating processing of the production system according to the embodiment.
[FIG. 7]

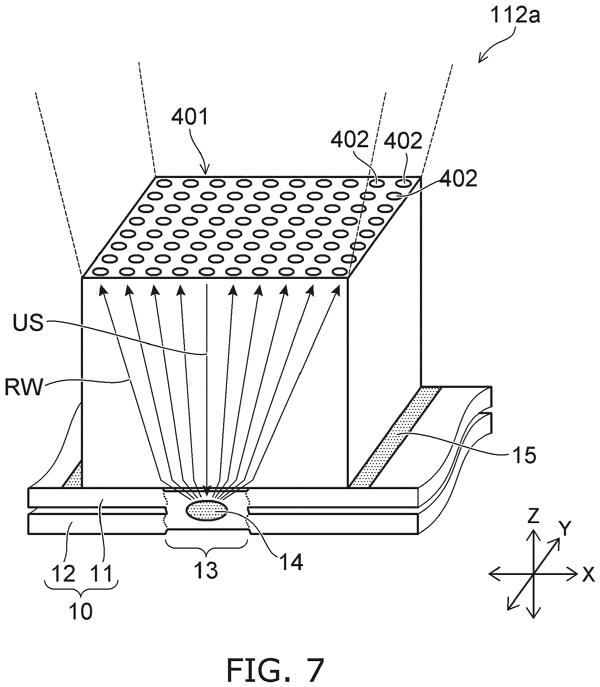

   FIG. 7 is a perspective view illustrating the internal structure of a detector tip.
[FIG. 8]

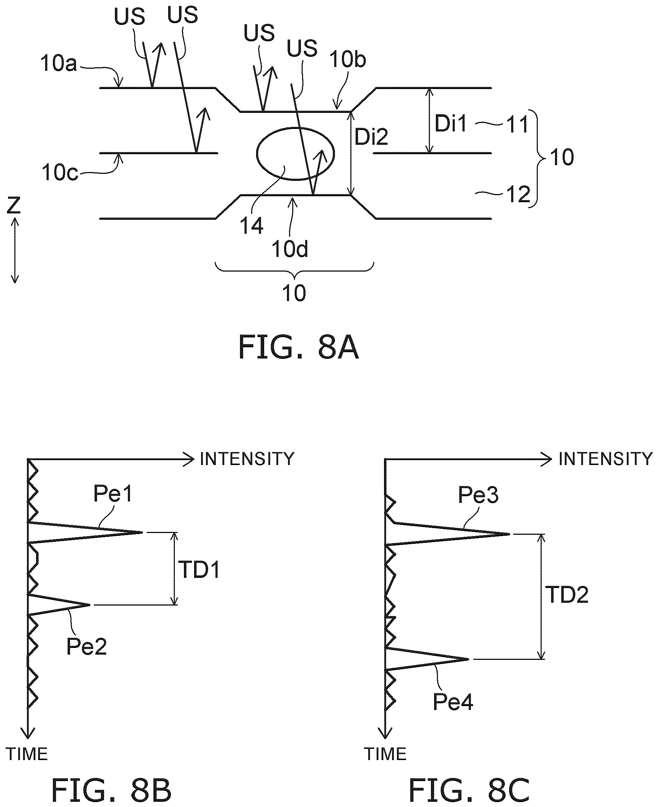

   FIGS. 8A to 8C are schematic views for describing an inspection method.
[FIG. 9]

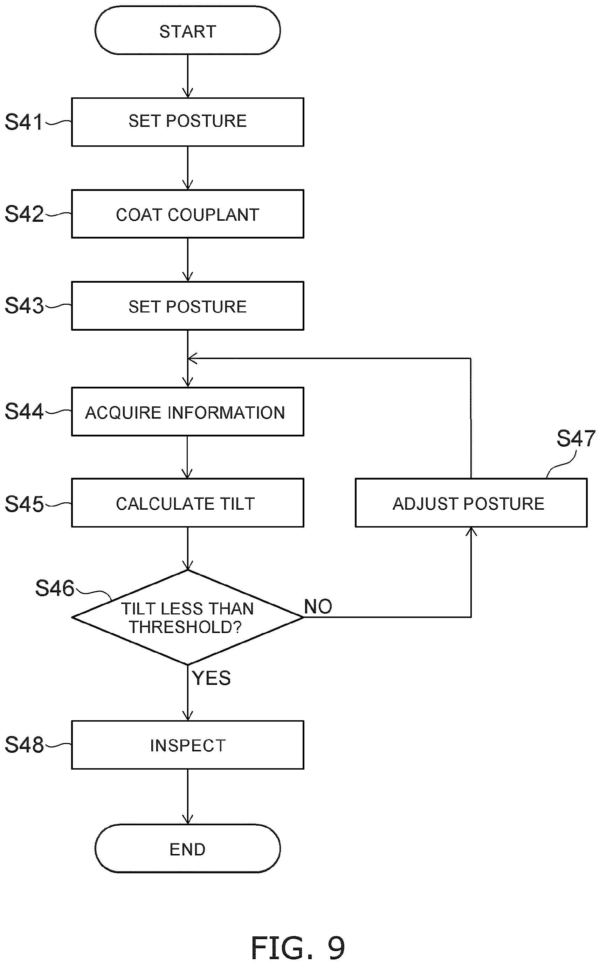

   FIG. 9 is a flowchart illustrating a specific example of a first task.
[FIG. 10]

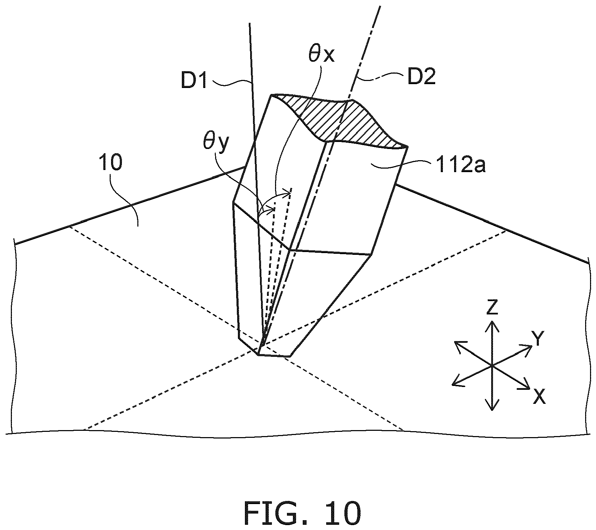

   FIG. 10 is a drawing for describing a calculation method of the tilt of the detector.
[FIG. 11]

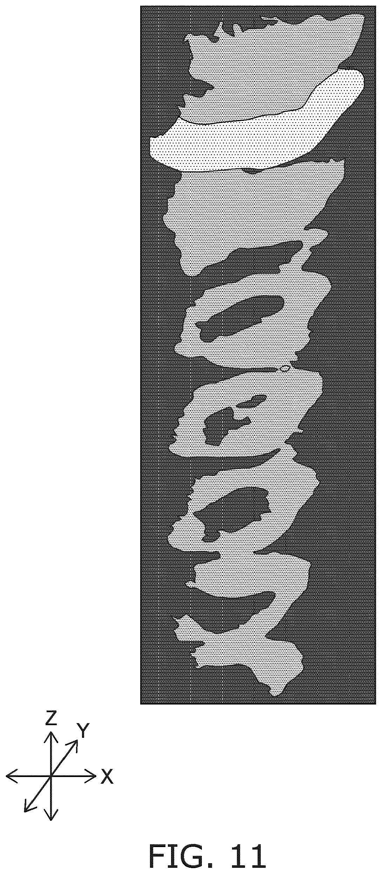

   FIG. 11 is an example of an image of detected information.
[FIG. 12]

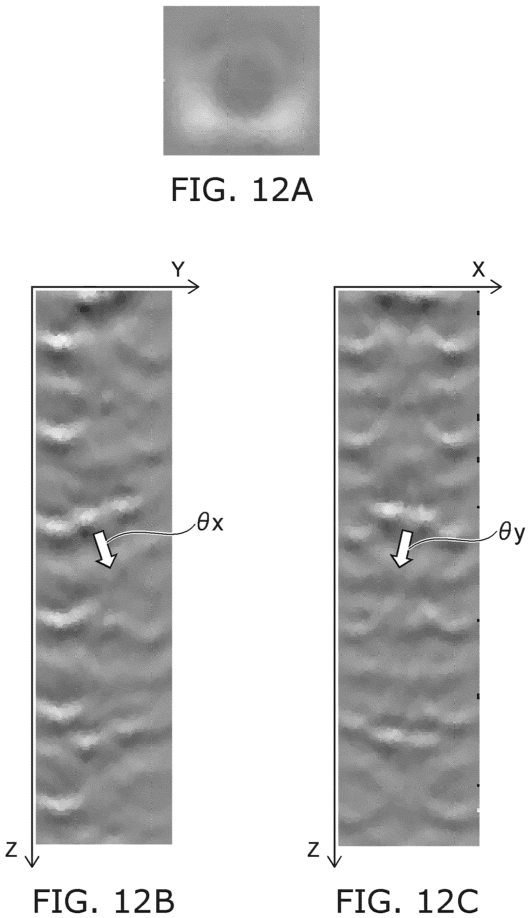

   FIGS. 12A to 12C are examples of images of the detected information.
[FIG. 13]

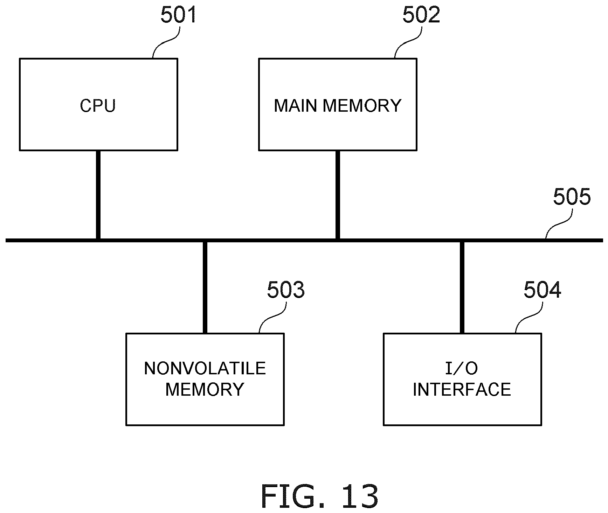

   FIG. 13 is a drawing illustrating a configuration example of a processing device and a control device.

### [Description of Embodiments]

Embodiments of the invention will now be described with reference to the drawings.

The drawings are schematic or conceptual; and the relationships between the thickness and width of portions, proportions of sizes among portions, etc., are not necessarily the same as the actual values. The dimensions and proportions may be illustrated differently among drawings, even when the same portion is illustrated.

In the specification and drawings, components similar to those already described are marked with the same reference numerals; and a detailed description is omitted as appropriate.

FIG. 1 is a schematic view illustrating a production system to which a robot system according to an embodiment is applied.

The robot system 100 according to the embodiment includes a first robot 110, a control device 120, and a processing device 130. The production system 300 includes the robot system 100 and a robot system 200. The robot system 200 includes a second robot 210, a control device 220, and a processing device 230. In the example, the production system 300 further includes a memory device 310, a teaching device 320, and a memory device 330.

The first robot 110 includes a first manipulator 111 and a first end effector 112. For example, the first end effector 112 is mounted to the distal part of the first manipulator 111. The first manipulator 111 is, for example, vertical articulated, horizontal articulated, or parallel link. The first manipulator 111 may be a combination of at least two manipulators selected from vertical articulated, horizontal articulated, and parallel link. The first robot 110 performs a first task corresponding to a function of the first end effector 112.

The control device 120 controls the first robot 110 by transmitting a command to the first robot 110. For example, the control device 120 controls the posture of the first robot 110 by operating a driver included in the first manipulator 111. Or, the control device 120 causes the first robot 110 to perform a first task by operating the first end effector 112.

Here, posture refers to the position and orientation corresponding to degrees of freedom of the robot. For example, the posture of a robot having six degrees of freedom is represented by the positions in three mutually-orthogonal directions (an X-direction, a Y-direction, and a Z-direction) and the angles (rolling, pitting, and yawing) around the directions.

The processing device 130 transmits data used in the control of the first robot 110 to the control device 120. Or, the processing device 130 receives data based on information acquired by the first robot 110 from the control device 120. The processing device 130 processes various data as appropriate.

The second robot 210 includes a second manipulator 211 and a second end effector 212. For example, the second end effector 212 is mounted to the distal part of the second manipulator 211. The second manipulator 211 is, for example, vertical articulated, horizontal articulated, or parallel link. The second manipulator 211 may be a combination of at least two manipulators selected from vertical articulated, horizontal articulated, and parallel link.

The second robot 210 performs a second task corresponding to a function of the second end effector 212. The function of the second end effector 212 is different from the function of the first end effector 112. Therefore, the second task that is performed by the second robot 210 is different from the first task.

The control device 220 controls the second robot 210 by transmitting a command to the second robot 210. For example, the control device 220 controls the posture of the second robot 210 by operating a driver included in the second manipulator 211. Or, the control device 220 operates the second end effector 212 to cause the second robot 210 to perform the first task.

The processing device 230 transmits data used in the control of the second robot 210 to the control device 220. Or, the processing device 230 receives data acquired by the second robot 210 from the control device 220. The processing device 230 processes various data as appropriate.

The memory device 310 stores data related to the robot systems 100 and 200. For example, the processing device 130 accesses the memory device 310 and acquires data related to the first task, data of the member that is the object of the first task, etc. Similarly, the processing device 230 accesses the memory device 310 and acquires data related to the second task, data of the member that is the object of the second task, etc. The processing device 130 stores data related to the first robot 110 and the first task transmitted from the control device 120 in the memory device 310. The processing device 230 stores data related to the second robot 210 and the second task transmitted from the control device 220 in the memory device 310.

The first robot 110 and the second robot 210 respectively perform the first task and the second task on the same member. For example, the second robot 210 performs the second task on a first member. Subsequently, the first robot 110 performs the first task on the same first member.

The memory device 330 stores design data related to the first member. The design data includes, for example, computer-aided design (CAD) data. For example, the teaching device 320 generates the operation program of the second robot 210 by referring to the design data. The teaching device 320 performs a confirmation of the robot operation, a confirmation of interference, etc., by causing the generated operation program to operate in a simulator.

The operation program includes data related to the posture of the second robot 210. The data shows the posture of a control point of the second robot 210 when the second robot 210 performs the second task. Hereinafter, the data of the posture of the control point of the second robot 210 generated based on the design data is called the design posture data. The teaching device 320 stores the generated design posture data in the memory device 310.

When the second robot 210 performs the second task, the processing device 230 accesses the memory device 310 and acquires second posture data of the posture of the second robot 210. For example, the design posture data is used as the second posture data. Or, the second posture data may be data of a posture taught using the second robot 210.

For example, in a workplace in which the second task is actually performed, a worker verifies whether or not problems occur in the workplace when the posture of the second robot 210 is set based on the design posture data. Specifically, it is confirmed whether or not there is a possibility that the second robot 210 may interfere with an article of the workplace or contact a worker when the posture of the second robot 210 is set based on the design posture data. When a problem may occur, the worker uses the second robot 210 to teach the posture of the second robot 210 to eliminate the problem. In such a case, the posture that is taught is stored in the memory device 310 as the second posture data.

The processing device 130 acquires the second posture data and generates first posture data. The first posture data is of the posture when the first robot 110 performs the first task. The processing device 130 stores the first posture data that is generated in the memory device 310. Or, the processing device 130 transmits the first posture data that is generated to the control device 120. The control device 120 sets the posture of the first robot 110 based on the first posture data and causes the first robot 110 to perform the first task.

The generation of the first posture data may be performed by the processing device 230. In such a case, the first posture data that is generated is stored in the memory device 310 or transmitted to the processing device 130 by the processing device 230.

When the first task and the second task are performed on multiple spots of one first member, multiple sets of first posture data and multiple sets of second posture data that correspond to the multiple spots are prepared. The multiple sets of first posture data are generated respectively based on the multiple sets of second posture data. At least a portion of the multiple sets of second posture data is generated based on the design posture data. Other than using the design posture data, at least a portion of the multiple sets of second posture data may be generated based on actual teaching. For example, a portion of the multiple sets of second posture data is generated based on the design posture data; and another portion of the multiple sets of second posture data is generated based on actual teaching.

The components of the production system 300 are connected to each other via wired communication, wireless communication, or a network.

Effects of the embodiment will now be described.

In the robot system 100 according to the embodiment, the control device 120 receives the first posture data. Then, the control device 120 sets the posture of the first robot 110 based on the first posture data and causes the first robot 110 to perform the first task. The first posture data is automatically generated by the processing device 130 or 230 based on the second posture data of the posture when the second robot 210 performs the second task. It is therefore unnecessary for a human to teach the posture when the first robot 110 performs the first task. According to the control device 120, the time necessary for the human to teach the first robot 110 can be reduced.

For example, in a production site, one product is produced by passing through multiple processes. In a production line that uses robots, different types of robots are used in each process. According to the production line, there are cases where one robot in one process performs a task on a specific spot of one member, and then another robot in another process performs a task on the same spot of the same member. By applying the invention according to the embodiment to such a production line, it is unnecessary to teach the posture in the task of the other robot. For example, the time necessary for teaching can be reduced, and the operation of the production line can be faster.

As a reference example, there is a method in which the first posture data is generated based on the design data. For example, the teaching device 320 generates the operation program of the first robot 110 based on the design data. This method is effective when the second posture data corresponds to the design posture data. By using the first posture data based on the design data, the other robot can perform the task on the same spot as the task performed by the one robot.

However, in practice, as described above, there are also cases where the design posture data is not employed, and the posture is taught in the workplace. In such a case, when the first posture data is generated based on the design posture data, the other robot cannot perform the task on the same spot as the task performed by the one robot. It is therefore favorable to generate the first posture data based on the second posture data. According to the embodiment, even when second posture data that is different from the design posture data is used, the other robot can perform the task on the same spot as the task performed by the one robot.

Specific examples of the embodiment will now be described.

FIG. 2 is a perspective view illustrating the first robot. FIG. 3 is a schematic view illustrating the second robot.

Here, a case is described where the first manipulator 111 and the second manipulator 211 are vertical articulated with six degrees of freedom.

As illustrated in FIG. 2, the first manipulator 111 includes six joints J1a to J1f and six links L1a to L1f that are alternately linked. The joints J1a to J1f are driven by not-illustrated drivers. The control device 120 drives the joints J1a to J1f, thereby adjusting the posture of the control point of the first robot 110.

As illustrated in FIG. 3, the second manipulator 211 includes six joints J2a to J2f and the six links L2a to L2f that are alternately linked. The joints J2a to J2f are driven by not-illustrated drivers. The control device 220 drives the joints J2a to J2f, thereby adjusting the posture of the control point of the second robot 210.

The control point is the point of which the posture is controlled by the control device 120 or 220. For example, the control point is set to any one point of the end effectors. When a workpiece or tool is held by the end effector, the control point may be set to any one point of the workpiece or tool. Hereinafter, "the posture of the control point of the first robot 110" also is called simply "the posture of the first robot 110". Similarly, "the posture of the control point of the second robot 210" also is called "the posture of the second robot 210".

As one specific example, the first end effector 112 includes a detector 112a and a coating device 112b as illustrated in FIG. 2. The second end effector 212 includes a welding device. As illustrated in FIG. 3, the welding device includes a welding gun 212a, an upper electrode 212b, a raising/lowering part 212c, a lower electrode 212d, and a current supply part 212e.

The second end effector 212 performs spot welding on the first member. In other words, the second task is spot welding. The first end effector 112 transmits an ultrasonic wave toward the spot-welded weld portion and detects a reflected wave of the ultrasonic wave. In other words, the first task acquires information related to the weld portion.

FIGS. 4A and 4B are schematic views illustrating operations of the production system according to the embodiment.

For example, the first task and the second task are performed on a first member 10 illustrated in FIG. 4A by the robot systems 100 and 200. The first member 10 includes steel plates 11 and 12.

For example, as illustrated in FIG. 4A, a transfer device T transfers the first member 10 to a position at which the second robot 210 is installed. The transfer device T stops at a preset position related to the second task. The second robot 210 performs spot welding of a first part P1 and a second part P2 of the first member 10. Specifically, the second manipulator 211 operates so that the first part P1 or the second part P2 is positioned between the upper electrode 212b and the lower electrode 212d. The raising/lowering part 212c operates and moves the upper electrode 212b toward the lower electrode 212d. The first member 10 is clamped by the upper electrode 212b and the lower electrode 212d. The current supply part 212e intermittently supplies a current between the upper electrode 212b and the lower electrode 212d. The steel plates 11 and 12 are partially melted, mixed, and joined.

The posture when the second robot 210 performs the spot welding is set based on the second posture data. For example, the second posture data includes the coordinates (*P_{X2}*, *P_{Y2}*, and *P_{Z2}*) of the part at which the second robot 210 spot-welds and the angles (*α_{J2a}*, *α_{J2b}*, *α_{J2c}*, *α_{J2d}*, *α_{J2e}*, and *α_{J2f}*) of the joints J2a to J2f. When spot-welding the first part P1, the control device 220 refers to the second posture data of the posture when spot-welding the first part P1. When spot-welding the second part P2, the control device 220 refers to the second posture data of the posture when spot-welding the second part P2. For each spot weld, the control device 220 sets the posture of the second robot 210 based on the second posture data that is referred to.

When the spot welding is completed, the transfer device T transfers the first member 10 to the position at which the first robot 110 is installed. The transfer device T stops at a position preset for the first task. As illustrated in FIG. 4B, the first robot 110 acquires information related to the first and second parts P1 and P2 of the first member 10. Specifically, the first manipulator 111 operates so that the coating device 112b faces the first part P1. The coating device 112b coats a couplant onto the first part P1. Then, the first manipulator 111 operates so that the tip of the detector 112a contacts the first part P1. The detector 112a transmits an ultrasonic wave that detects a reflected wave of the ultrasonic wave. For example, three-dimensional data of the intensity distribution of the reflected wave is acquired. The state of the first part P1 is reflected in the data. The first robot 110 performs a similar operation on the second part P2 as well.

The posture when the first robot 110 acquires the data is set based on the first posture data. Similarly to the second posture data, the first posture data includes the coordinates (*P_{X1}*, *P_{Y1}*, and *P_{Z1}*) of the part for which the first robot 110 acquires the data and the angles (*α_{J1a}*, *α_{J1b}*, *α_{J1c}*, *α_{J1d}*, *α_{J1e}*, and *α_{J1f}*) of the joints J1a to J1f.

When the first end effector 112 includes multiple devices, the first posture data is prepared for each of the devices. For example, when acquiring the information of the first part P1, the control device 120 refers to the first posture data of the posture when coating the couplant onto the first part P1 and the first posture data of the posture when acquiring the information of the first part P1. This is similar when acquiring the information of the second part P2. When acquiring the information of the parts, the control device 120 sets the posture of the first robot 110 based on the first posture data that is referred to.

The first posture data is generated using the second posture data. For example, the first posture data is generated by the processing device 230. The processing device 230 refers to the second posture data, first structure data, and second structure data when generating the first posture data.

The first structure data includes data of the structure of the first manipulator 111. The first structure data further includes data of the relationship between the posture of the first robot 110 and the posture of the distal part of the first manipulator 111. The data of the structure of the first manipulator 111 shows the lengths (*β_{L1a}*, *β_{L1b}*, *β_{L1c}*, *β_{L1d}*, *β_{L1e}*, and *β_{L1f}*) of the links L1a to L1f included in the first manipulator 111. The distal part of the first manipulator 111 corresponds to the part of the first manipulator 111 for which the posture is calculated using the angles (*α_{J1a}*, *α_{J1b}*, *α_{J1c}*, *α_{J1d}*, *α_{J1e}*, and *α_{J1f}*) of the joints J1a to J1f and the lengths (*β_{L1a}*, *β_{L1b}*, *β_{L1c}*, *β_{L1d}*, *β_{L1e}*, and *β_{L1f}*) of the links L1a to L1f.

For example, the positional relationship is represented by the displacement of the posture of the control point of the first robot 110 with respect to the posture of the distal part of the first manipulator 111. Specifically, the positional relationship is represented by the displacements (*D_{X1}*, *D_{Y1}*, and *D_{Z1}*) of the positions in the X-direction, the Y-direction, and the Z-direction and the displacements (*D_{θ1}*, *D_{φ1}*, and *D_{ψ1}*) of the angles around the directions.

The second structure data includes data of the positional relationship between the control point of the second robot 210 and the distal part of the second manipulator 211.

The second structure data includes data of the structure of the second manipulator 211. The second structure data further includes data of the relationship between the posture of the second robot 210 and the posture of the distal part of the second manipulator 211. The data of the structure of the second manipulator 211 is of the lengths (*β_{L2a}*, *β_{L2b}*, *β_{L2c}*, *β_{L2d}*, *β_{L2e}*, and *β_{L2f}*) of links L2a to L2f included in the second manipulator 211. The distal part of the second manipulator 211 corresponds to the part of the second manipulator 211 of which the posture is calculated using the angles (*α_{J2a}*, *α_{J2b}*, *α_{J2c}*, *α_{J2d}*, *α_{J2e}*, and *α_{J2f}*) of the joints J2a to J2f and the lengths (*β_{L2a}*, *β_{L2b}*, *β_{L2c}*, *β_{L2d}*, *β_{L2e}*, and *β_{L2f}*) of the links L2a to L2f.

For example, the positional relationship is represented by the displacement of the posture of the distal part of the second manipulator 211 with respect to the posture of the control point of the second robot 210. Specifically, the positional relationship is represented by the displacements (*D_{X2}*, *D_{Y2}*, and *D_{Z2}*) of the positions in the X-direction, the Y-direction, and the Z-direction and the displacements (*D_{θ2}*, *D_{φ2}*, and *D_{ψ2}*) of the angles around the directions.

First, the processing device 230 uses the second posture data and the second structure data to calculate the posture of the second robot 210 when spot-welding a designated part. Then, the processing device 230 uses the first structure data and the calculated posture to calculate the posture of the distal part of the first manipulator 111 when positioning the tip of the first end effector 112 at the part to be spot-welded. The processing device 230 uses the calculated posture of the distal part of the first manipulator 111 and the lengths (*β_{L1a}*, *β_{L1b}*, *β_{L1c}*, *β_{L1d}*, *β_{L1e}*, and *β_{L1f}*) of the links L1a to L1f to calculate the angles (*α_{J1a}*, *α_{J1b}*, *α_{J1c}*, *α_{J1d}*, *α_{J1e}*, and *α_{J1f}*) of the joints J1a to J1f by an inverse kinematics calculation. Thus, the first posture data is generated. The first posture data includes the angles of the joints J1a to J1f when the information of the spot-welded part is acquired. The processing device 230 stores the generated first posture data in the memory device 310.

The coordinates included in the first posture data and the coordinates included in the second posture data may be included in mutually-different coordinate systems or may be included in the same one coordinate system. A correction that corresponds to the different coordinate systems may be applied as appropriate when generating the coordinates of the second posture data based on the coordinates of the first posture data.

The calculations described above may be omitted when the following conditions are satisfied. A first condition is that the lengths of the links L1a to L1f of the first manipulator 111 are respectively equal to the lengths of the links L2a to L2f of the second manipulator 211. A second condition is that the positional relationship between the first robot 110 and the first member 10 in the first task is the same as the positional relationship between the second robot 210 and the first member 10 in the second task. A third condition is that the relationship between the posture of the first robot 110 and the posture of the distal part of the first manipulator 111 is the same as the relationship between the posture of the second robot 210 and the posture of the distal part of the second manipulator 211. When these conditions are satisfied, the processing device 230 may generate the second posture data as-is as the first posture data and may store the first posture data in the memory device 310.

When the first end effector 112 includes multiple devices, the first structure data is prepared for each of the devices. The first structure data of each device is used to generate the first posture data when the task is performed using each device.

The transfer device T includes, for example, at least one of a belt conveyor, a roller conveyor, an automated guided vehicle (AGV), or a raising/lowering device. The transfer device T may include multiple transfer mechanisms. For example, a transfer mechanism that transports the member to the position at which the first robot 110 is installed and another transfer mechanism that transports the member to the position at which the second robot 210 is installed may be included.

The operation of the transfer device T may be controlled by the processing device 130 or 230 or may be controlled by another processing device. A higher-level processing device that manages the processing devices 130 and 230 may be provided, and the transfer device T may be controlled by the higher-level processing device.

FIG. 5 is an example of data stored in the memory device. For example, the memory device 310 stores the tables illustrated in FIGS. 5A and 5B. FIG. 5A illustrates a table (a first table) including data related to the first task. FIG. 5B illustrates a table (a second table) including data related to the second task.

Each table includes the process ID, process name, previous process ID, member ID, member name, robot ID, robot name, coordinate, and joint angle. The coordinate indicates the coordinate of the control point of the robot when performing the process. The joint angle indicates the angles of the joints of the robot when performing the process. In the table illustrated in FIG. 5A, the combination of one coordinate and one joint angle corresponds to one set of first posture data. In the table illustrated in FIG. 5B, the combination of one coordinate and one joint angle corresponds to one set of second posture data.

The processing device 230 refers to the first table when generating the first posture data. For each process, the processing device 230 extracts the previous process ID and refers to the second table. The processing device 230 searches for the process ID in the second table corresponding to the extracted previous process ID and extracts the second posture data associated with the process ID of the second table. The processing device 230 generates the first posture data based on the extracted second posture data. The generated first posture data is associated with the process ID corresponding to the extracted previous process ID and stored in the first table by the processing device 230.

When the first robot 110 performs the first task, the processing device 130 appropriately extracts the first posture data from the memory device 310 and transmits the first posture data to the control device 120. The control device 120 sets the posture of the first robot 110 based on the received first posture data and causes the first task to be performed.

FIGS. 6A and 6B are flowcharts illustrating processing of the production system according to the embodiment.

FIG. 6A illustrates processing performed before operating the production line. FIG. 6B illustrates processing performed when operating the production line.

As illustrated in FIG. 6A, based on the design data, the teaching device 320 generates the design posture data when the second robot 210 performs the second task (step S1). The second posture data is generated based on the design posture data (step S2). As described above, the second posture data may be generated based on the design posture data and may be generated separately from the design posture data.

As illustrated in FIG. 6B, the second robot 210 performs the second task in the posture indicated by the second posture data (step S3). The processing device 230 generates the first posture data based on the second posture data (step S4). The first robot 110 performs the first task in the posture indicated by the first posture data (step S5). Step S4 may be performed before operating the production line after step S2.

FIG. 7 is a perspective view illustrating the internal structure of a detector tip.

Operations of the robot system 100 will now be described in detail. Here, an example is described in which the robot system 100 is used as an inspection system inspecting a spot-welded weld portion.

A matrix sensor 401 illustrated in FIG. 7 is located inside the detector 112a tip. The matrix sensor 401 includes multiple ultrasonic sensors 402. The ultrasonic sensors 402 are, for example, transducers. The multiple ultrasonic sensors 402 are arranged along two directions (the X-direction and the Y-direction) that cross each other. In the example, the X-direction and the Y-direction are orthogonal. The X-direction and the Y-direction in which the multiple ultrasonic sensors 402 are arranged may or may not correspond to the X-direction and the Y-direction of the coordinate system of the position of the control point.

FIG. 7 illustrates a state of inspecting the first member 10. The first member 10 is made by spot-welding a steel plate 11 and a steel plate 12 at a weld portion 13. A solidified portion 14 is formed at the weld portion 13 by a portion of the steel plate 11 and a portion of the steel plate 12 melting, mixing, and solidifying. Each of the ultrasonic sensors 402 transmits an ultrasonic wave US toward the first member 10 coated with a couplant 15 and detects (receives) a reflected wave RW from the first member 10.

In a more specific example as illustrated in FIG. 7, one ultrasonic sensor 402 transmits the ultrasonic wave US toward the weld portion 13. A portion of the ultrasonic wave US is reflected by the upper or lower surface of the first member 10, etc. Each of the multiple ultrasonic sensors 402 detects the reflected wave RW. The ultrasonic sensors 402 sequentially transmit the ultrasonic wave US; and each reflected wave RW is detected by the multiple ultrasonic sensors 402.

Each of the ultrasonic sensors 402 transmits a signal (a current) toward the control device 120 when detecting the reflected wave. The intensity of the signal corresponds to the intensity of the reflected wave. The control device 120 transmits data of the received signal intensity to the processing device 130. The processing device 130 inspects the weld portion 13 based on the received data.

FIG. 8 is schematic views for describing an inspection method.

As illustrated in FIG. 8A, a portion of the ultrasonic wave US is reflected by an upper surface 10a of the steel plate 11 or an upper surface 10b of the weld portion 13. Another portion of the ultrasonic wave US enters the first member 10 and is reflected by a lower surface 10c of the steel plate 11 or a lower surface 10d of the weld portion 13.

The Z-direction positions of the upper surface 10a, the upper surface 10b, the lower surface 10c, and the lower surface 10d are different from each other. In other words, the distances in the Z-direction between the ultrasonic sensor 402 and these surfaces are different from each other. The peak of the intensity of the reflected wave is detected when the ultrasonic sensor 402 receives the reflected wave from these surfaces. Which surface reflected the ultrasonic wave US can be verified by calculating the time until each peak is detected after transmitting the ultrasonic wave US.

FIGS. 8B and 8C are graphs illustrating the relationship between the time after transmitting the ultrasonic wave US and the intensity of the reflected wave RW. Here, the intensity of the reflected wave RW is illustrated as an absolute value. The graph of FIG. 8B illustrates the reception result of the reflected wave RW from the upper surface 10a and the lower surface 10c of the steel plate 11. The graph of FIG. 8C illustrates the reception result of the reflected wave RW from the upper surface 10b and the lower surface 10d of the weld portion 13.

In the graph of FIG. 8B, a peak Pe1 occurring first is based on the reflected wave RW from the upper surface 10a. A peak Pe2 occurring second is based on the reflected wave RW from the lower surface 10c. The times at which the peak Pe1 and the peak Pe2 are detected correspond respectively to the Z-direction positions of the upper surface 10a and the lower surface 10c of the steel plate 11. A time difference TD1 between the time at which the peak Pe1 is detected and the time at which the peak Pe2 is detected corresponds to a distance Di1 in the Z-direction between the upper surface 10a and the lower surface 10c.

Similarly, in the graph of FIG. 8C, a peak Pe3 occurring first is based on the reflected wave RW from the upper surface 10b. A peak Pe4 occurring second is based on the reflected wave RW from the lower surface 10d. The times at which the peak Pe3 and the peak Pe4 are detected correspond respectively to the Z-direction positions of the upper surface 10b and the lower surface 10d of the weld portion 13. A time difference TD2 between the time at which the peak Pe3 is detected and the time at which the peak Pe4 is detected correspond to a distance Di2 in the Z-direction between the upper surface 10b and the lower surface 10d.

The processing device 130 inspects whether or not multiple points at the weld portion 13 vicinity are welded based on the time difference of the adjacent peaks. There are cases where the upper surface 10b and the lower surface 10d of the weld portion 13 are tilted with respect to the upper surface 10a of the steel plate 11. This is due to the weld portion 13 including the solidified portion 14, shape deformation in the welding process, etc. In such a case, it is desirable for the ultrasonic waves US to be transmitted along a direction that is, on average, perpendicular to the upper surface 10b or the lower surface 10d. Thereby, the ultrasonic wave can be reflected more intensely at the upper surface 10b and the lower surface 10d, and the accuracy of the inspection can be increased.

FIG. 9 is a flowchart illustrating a specific example of the first task.

First, the control device 120 refers to the first posture data of the posture of the first robot 110 when the couplant is coated using the coating device 112b. The control device 120 sets the posture of the first robot 110 based on the first posture data (step S41). The control device 120 causes the couplant to be coated onto the first member 10 from the coating device 112b (step S42). The control device 120 refers to the first posture data of the posture of the first robot 110 when the information is acquired using the detector 112a. The control device 120 sets the posture of the first robot 110 based on the first posture data (step S43). The control device 120 uses the detector 112a to acquire information of the spot-welded weld portion (step S44).

The control device 120 transmits the acquired information to the processing device 130. The processing device 130 processes the information and calculates the tilt of the detector 112a with respect to the first member 10 (step S45). The processing device 130 determines whether or not the tilt is less than a prescribed threshold (step S46). When the tilt is greater than the threshold, the control device 120 adjusts the posture of the first robot 110 to reduce the tilt (step S47). After the adjustment of the posture, step S44 is re-performed.

When the tilt is less than the threshold, the processing device 130 inspects the weld portion by using the information acquired in step S44 directly before (step S48). Specifically, it is determined whether or not the first member 10 is appropriately welded at the weld portion. For example, the processing device 130 stores the inspection result in the memory device 310.

One specific example of a method for calculating the tilt will now be described.

FIG. 10 is a drawing for describing the calculation method of the tilt of the detector.

FIGS. 11 and 12 are examples of images of the detected information.

FIG. 11 is three-dimensional volume data depicted based on the detection result of the reflected wave. FIG. 12A illustrates the surface of the weld portion 13 in the volume data illustrated in FIG. 11. FIG. 12B illustrates a Y-Z cross section at the weld portion 13 vicinity in the volume data illustrated in FIG. 11. FIG. 12C illustrates an X-Z cross section at the weld portion 13 vicinity in the volume data illustrated in FIG. 11. In FIGS. 12B and 12C, the upper side is the surface of the weld portion 13; and the data in the depth direction is shown downward. Parts of high luminance are parts of high ultrasonic wave reflection intensity. The ultrasonic wave is intensely reflected by the bottom surface of the weld portion 13, the surfaces between the unjoined members, etc.

The tilt of the detector 112a corresponds to the angle between a direction D1 perpendicular to the weld portion 13 and a direction D2 of the detector 112a illustrated in FIG. 10. This angle is represented by an angle θx around the X-direction and an angle θy around the Y-direction. The direction D2 is perpendicular to the arrangement direction of the ultrasonic sensors 402.

As illustrated in FIG. 12B, the angle θx is calculated based on the detection result in the Y-Z cross section. As illustrated in FIG. 12C, the angle θy is calculated based on the detection result in the X-Z cross section. The processing device 130 calculates the average of the three-dimensional luminance gradient of each cross section as the angles θx and θy. The processing device 130 stores the calculated angles θx and θy in the memory device 310 as the tilt of the detector 112a.

FIG. 13 is a drawing illustrating a configuration example of the processing device and the control device.

The control device 120, the processing device 130, the control device 220, and the processing device 230 each include, for example, a central processing unit (CPU) 501, main memory 502, nonvolatile memory 503, an I/O interface 504, and a bus 505 as illustrated in FIG. 13.

The bus 505 connects the CPU 501, the main memory 502, the nonvolatile memory 503, and the I/O interface 504 to each other.

The main memory 502 is accessible more quickly than the nonvolatile memory 503. The main memory 502 includes, for example, random access memory (RAM). The nonvolatile memory 503 is used as a storage region of various data. The nonvolatile memory 503 includes, for example, read only memory (ROM), flash memory, an optical disk, a magnetic disk, a detachable memory device, or a combination of such memory. The I/O interface 504 is an interface device for connecting to other devices.

Programs necessary for the processing of the control device 120, the processing device 130, the control device 220, or the processing device 230 are stored in the nonvolatile memory 503. For example, firmware programs and robot programs for causing the control device 120 or 220 to operate the first robot 110 or the second robot 210 are stored. The operation procedures of the robots are described in the robot programs. For example, in the control device 120 or 220, the CPU 501 loads the firmware program from the nonvolatile memory 503 into the main memory 502. The CPU 501 executes the robot program based on the loaded firmware program. The CPU 501 interprets the robot program and calculates the drive command for the driver of the first or second robot 110 or 210 based on the result. The calculated drive command is transmitted to the robot via the I/O interface 504.

The control device 120, the processing device 130, the control device 220, and the processing device 230 each may have the configuration illustrated in FIG. 13, or one device that has the configuration illustrated in FIG. 13 may function as at least two selected from the control device 120, the processing device 130, the control device 220, and the processing device 230. For example, one control device may function as the control devices 120 and 220. One processing device may function as the processing devices 130 and 230.

The configuration illustrated in FIG. 13 is applicable to the teaching device 320 as well.

The time necessary for a human to teach the first robot can be reduced by using the control method performed by the control device 120, the robot system 100, the inspection system, the production system 300, or the control device 120 described above. Similar effects can be obtained by using a program that causes the control device of the robot system to perform the control method described above.

The processing of the various data described above may be recorded, as a program that can be executed by a computer, in a magnetic disk (a flexible disk, a hard disk, etc.), an optical disk (CD-ROM, CD-R, CD-RW, DVD-ROM, DVD±R, DVD±RW, etc.), semiconductor memory, or another recording medium.

For example, the data that is recorded in the recording medium can be read by the computer (or an embedded system). The recording format (the storage format) of the recording medium is arbitrary. For example, the computer reads the program from the recording medium and causes a CPU to execute the instructions recited in the program based on the program. In the computer, the acquisition (or the reading) of the program may be performed via a network.

While certain embodiments of the inventions have been illustrated, these embodiments have been presented by way of example only, and are not intended to limit the scope of the inventions. These novel embodiments may be embodied in a variety of other forms; and various omissions, substitutions, modifications, etc., can be made without departing from the spirit of the inventions. These embodiments and their modifications are within the scope and spirit of the inventions, and are within the scope of the inventions described in the claims and their equivalents. The embodiments described above can be implemented in combination with each other.

## Claims

1. A control device (120),
the control device (120) receiving first posture data of a posture of a first robot (110), the first robot (110) including a first manipulator (111) and a first end effector (112),
the control device (120) setting the posture of the first robot (110) based on the first posture data and causing the first robot (110) to perform a first task on a first member,
the first posture data being generated based on second posture data of a posture when a second robot (210) performs a second task on the first member,
the second robot (210) including a second manipulator (211) and a second end effector (212).

2. The control device (120) according to claim 1, wherein
the control device (120) receives a plurality of sets of the first posture data,
the control device (110) sequentially sets the posture of the first robot (110) based on the plurality of sets of first posture data, and
the control device (120) causes the first robot (110) to perform the first task at each of the postures.

3. The control device (120) according to claim 2, wherein
the plurality of sets of first posture data is generated respectively based on a plurality of sets of the second posture data,
a portion of the plurality of sets of second posture data is generated based on design posture data generated from design data of the first member, and
an other portion of the plurality of sets of second posture data is generated based on teaching to the second robot (210).

4. The control device (120) according to claim 1, wherein
the first posture data is generated using the second posture data, first structure data, and second structure data,
the first structure data is of a relationship between a structure of the first manipulator (111), a posture of a distal part of the first manipulator (111) and the posture of the first robot (110), and
the second structure data is of a relationship between a structure of the second manipulator (211), a posture of a distal part of the second manipulator (211), and the posture of the second robot (210).

5. The control device (120) according to any one of claims 1 to 4, wherein
the first end effector (112) includes a detector (112a), an ultrasonic sensor (402) is included in the detector (112a),
the second end effector (212) includes a welding device performing spot welding, and
in the first task, the first robot (110) is caused to use the detector (112a) to acquire information of a weld portion (13) that was spot-welded.

6. An inspection system, comprising:
the control device (120) according to claim 5; and
a processing device (130),
the information including a reflected wave intensity of an ultrasonic wave from the weld portion (13),
the processing device (130) using the information to perform an inspection of the weld portion (13) of a calculation of a tilt of the detector (112a) with respect to the weld portion (13).

7. The inspection system according to claim 6, further comprising:
the first robot (110).

8. A control method, comprising:
receiving first posture data of a posture of a first robot (110), the first robot (110) including a first manipulator (111) and a first end effector (112); and
setting the posture of the first robot (110) based on the first posture data and causing the first robot (110) to perform a first task on a first member,
the first posture data being generated based on second posture data of a posture when a second robot (210) performs a second task on the first member,
the second robot (210) including a second manipulator (211) and a second end effector (212).

9. The control method according to claim 8, wherein
the first end effector (112) includes a detector (112a),
an ultrasonic sensor (402) is included in the detector (112a),
the second end effector (212) includes a welding device performing spot welding, and
in the first task, the first robot (110) is caused to use the detector (112a) to acquire information of a weld portion (13) that was spot-welded.

10. A program causing a computer to function as a control device (120),
the control device (120) receiving first posture data of a posture of a first robot (110),
the first robot (110) including a first manipulator (111) and a first end effector (112),
the control device (120) setting the posture of the first robot (110) based on the first posture data and causing the first robot (110) to perform a first task on a first member,
the first posture data being generated based on second posture data of a posture when a second robot (210) performs a second task on the first member,
the second robot (210) including a second manipulator (211) and a second end effector (212).

11. The program according to claim 10, wherein
the first end effector (112) includes a detector (112a),
an ultrasonic sensor (402) is included in the detector (112a),
the second end effector (212) includes a welding device performing spot welding, and
in the first task, the control device (120) causes the first robot (110) to use the detector (112a) to acquire information of a weld portion (13) that was spot-welded.

12. A storage medium,
the storage medium storing the program according to claim 10 or 11.
